# EUROPEAN PATENT SPECIFICATION

(11) **EP 1 641 189 B1**
(45) Date of publication and mention of the grant of the patent: **19.05.2010**
(21) Application number: 04022968.4
(22) Date of filing: 27.09.2004
(51) Int. Cl.: H04L 12/56, H04L 12/18, H04W 24/00

(54) **Error ratio measurement in the radio link control layer for quality of service control in a wireless communication system**
Fehlerratenmessung in der Funkverbindungssteuerungsschicht zur Steuerung der Dienstqualität eines drahtlosen Kommunikationssystems
Mesure du taux d'erreurs dans la couche de commande de liaison pour le contrôle de qualité de service dans un réseau de communications sans fil

(43) Date of publication of application: 29.03.2006
(73) Proprietor: Panasonic Corporation, Kadoma-shi Osaka 571-8501 (JP)
(72) Inventor: Charpentier, Frédéric, 10115 Berlin (DE); Löhr, Joachim, 64287 Darmstadt (DE); Seidel, Eiko, 64285 Darmstadt (DE)
(74) Representative: Grünecker, Kinkeldey, Stockmair & Schwanhäusser Anwaltssozietät

(56) References cited:
- EP-A- 1 372 310
- US-A1- 2003 207 696
- US-B1- 6 687 499
- 3GPP: "3rd Generation Partnership Project; Technical Specification Group Radio Access Network; Radio Link Control (RLC) protocol specification (Release 6)" 3GPP TS 25.322 V6.1.0, June 2004 (2004-06), page COMPLETE, XP002320345

## Description

This invention generally relates to wireless communication, and in particular to a QoS (quality of service) control mechanism in case of a wireless communication system. It applies in particular to MBMS (Multimedia Broadcast Multicast Service), which is a new UMTS feature currently standardised for the UMTS release 6 within 3GPP. However, the invention is not limited to UMTS but could be applied to any communication system including future mobile communication standards (4G).

In every communication system, the control of the quality of service (QoS) has always been a widely discussed topic. This is particularly true for wireless communication systems, where the interface between transmitter and receiver generally causes a more or less severe deformation of the physical signal leading to degradation of the received signal quality. In order to cope with this, several methods have been developed. Firstly, some modulation techniques have been specially developed in order to match the physical characteristic of the transmission medium. Secondly, encoding methods are used in order to protect the message from interference. Finally, QoS control mechanisms enable an active control of the reception quality of the transmitted signal. The main idea of this type of techniques is that the receiver informs, by some means, the transmitter about the reception quality in order to allow the transmitter to adapt the transmission characteristics (e.g. transmission power) and meet some predefined QoS attribute targets.

This invention belongs to the last category and provides a new mechanism for controlling the reception quality of a transmitted signal over a non-error free medium.

### QoS classes and attributes

The nature of the information to be transmitted has a strong influence on the way this information should be transmitted. For instance, a voice call has completely different characteristics than a browsing session (internet). In 3GPP TS 23.107v6.1.0 "Quality of Service (QoS) concept and architecture" and in "WCDMA for UMTS, radio access for third generation mobile communications, second edition", Harri Holma and Antti Toskala, Wiley editions, the different types of information expected to be commonly transmitted over 3G are presented. 4 different classes of services have been identified and the following table lists their respective characteristics and envisaged applications.

**Table 1: UMTS QoS classes**

| **Traffic class** | **Conversational class conversational real time** | **Streaming class streaming real time** | **Interactive class Interactive best effort** | **Background Background best effort** |
|---|---|---|---|---|
| Fundamental characteristics | - Preserve time relation (variation) between information entities of the stream Conversational pattern (stringent and low delay) | -Preserve time relation (variation) between information entities of the stream | -Request response pattern -Preserve payload content | -Destination is not expecting the data within a certain time -Preserve payload content |
| Example of the - application | voice | -streaming video | -Web browsing | -background download of emails |

For each of these QoS classes or bearer traffic classes, a list of QoS attributes has been defined and is shown in the following table. If the QoS attributes are met, it is ensured that the message is perceived by the end user with the required quality. The QoS attributes are negotiated between the different elements of the communication chain (UE, RNC, CN elements) during the setup of a connection and depend on the type of service requested and the capabilities of the different nodes. If one of the QoS attributes is not met, the end user will certainly notice a degradation of the communication (e.g. voice distortion, connection interruption, etc).

**Table 2: QoS attributes defined for each bearer traffic class**

| **Traffic class** | **Conversational class** | **Streaming class** | **Interactive class** | **Background class** |
|---|---|---|---|---|
| Maximum bitrate | X | X | X | X |
| Delivery order | X | X | X | X |
| Maximum SDU size | X | X | X | X |
| SDU format information | X | X | | |
| SDU error ratio | X | X | X | X |
| Residual bit error ratio | X | X | X | X |
| Delivery of erroneous SDUs | X | X | X | X |
| Transfer delay | X | X | | |
| Guaranteed bit rate | X | X | | |
| Traffic handling priority | | | X | |
| Allocation/ Retention priority | X | X | X | X |
| Source statistics descriptor | X | X | | |
| Signalling Indication | | | X | |

A definition of each of these QoS attributes can be found in 3GPP TS 23.107v6.1.0 and Holma and Toskala, both cited above. One of the most important Qos attributes is the "SDU error rate" which refers to the RLC SDU error rate that will be explained in the next section.

UMTS air interface layers

In order to enable data transmission over a wireless interface, 3GPP defined a set of layers and their respective protocols, which have the goal to provide the necessary services to support the pre-defined QoS (data rate, error rate, priority etc) defined at the bearer setup.

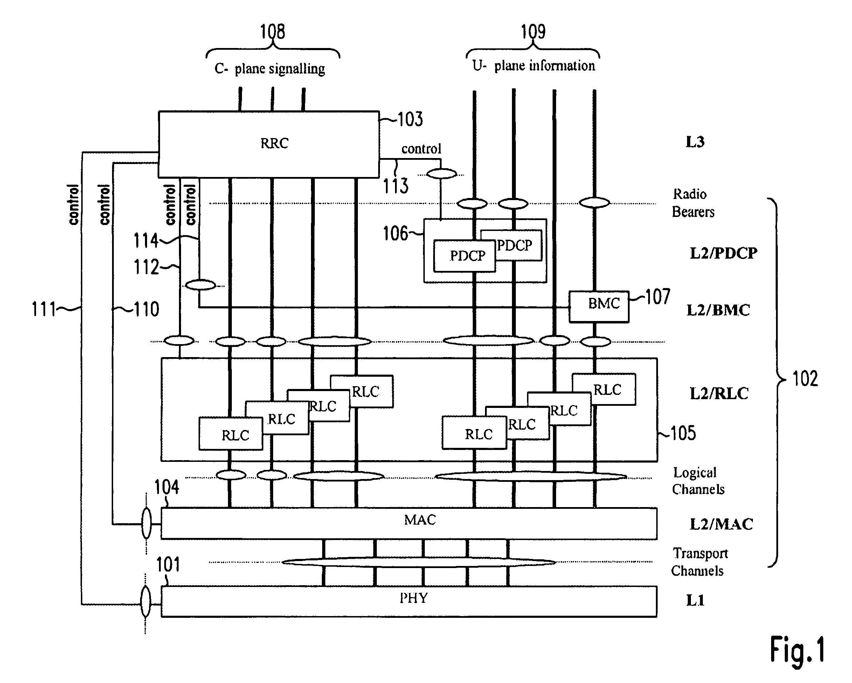

As shown in Fig. 1, the radio interface is layered into three protocol layers:
- the physical layer (L1) 101;
- the data link layer (L2) 102;
- RRC layer (L3) 103.

Layer 2 is split into the following sub-layers: Medium Access Control (MAC) 104, Radio Link Control (RLC) 105, Packet Data Convergence Protocol (PDCP) 106 and Broadcast/Multicast Control (BMC) 107. Each layer has well defined functions, which are summarized in 3GPP TS 25.301v6.0.0 "Radio Interface Protocol Architecture".

The Layer 3 and RLC layer are divided into Control (C-) and User (U-) planes 108 and 109. PDCP 106 and BMC 107 exist in the U-plane 109 only. The main difference between control and user plane is that the control plane carries only control information (signalling) that is used by the peer entity in the receiver. The user plane on the other hand carries the data itself (e.g. voice).

The RLC layer 105 provides in the control plane 108 Signalling Radio Bearer (SRB) services and in the user plane 109 Radio Bearer (RB) services, except when the PDCP and BMC protocols are used. In this case RB services are provided by PDCP 106 or BMC 107.

The figure also shows connections 110 and 111 between RRC 103 and MAC 104 as well as between RRC 103 and L1 101 providing local inter-layer control services. Equivalent control interfaces 112 to 114 exist between RRC 103 and the RLC sub-layers 105, between RRC 103 and the PDCP sub-layers 106 and between RRC 103 and BMC sub-layers107. These interfaces allow the RRC 103 to control the configuration of the lower layers within the same entity (transmission side or receiving side). Finally, the data transfer between the RLC 103 and the MAC sub-layer 104 is performed thanks to logical channels and by transport channels between the MAC 104 and the physical layer 101.

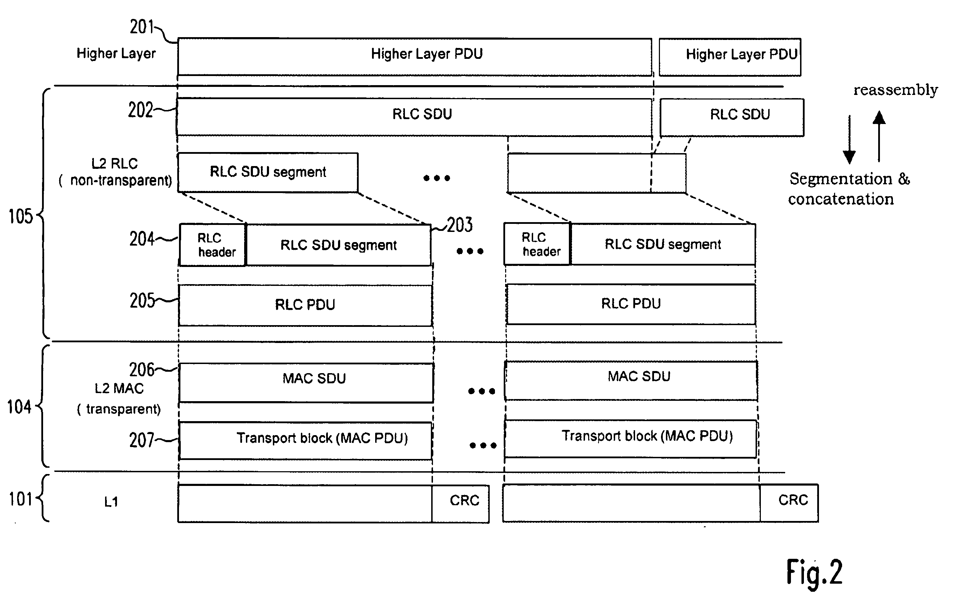

When information is to be transmitted from one layer to the one immediately below, SDU (Service Data Unit) and PDU (Protocol Data Unit) are exchanged as shown in Fig. 2, which depicts a configuration where the MAC layer 104 is transparent and the RLC layer 105 is not transparent. (A layer is said to be transparent when no action is performed on the data it received, i.e. no header addition, but the layer may perform segmentation/reassembly of the data packets.) Starting from the top of the picture, a higher layer PDU 201 is received by the RLC layer 105. In case of a transparent PDCP layer 106, this higher layer PDU is an IP packet. From the RLC point of view, this packet is an RLC SDU 202 that may need to be segmented in order to match the size of the RLC SDU segment 203 configured by RRC. The RLC protocol adds a header 204 to each RLC SDU segment 203, which has a content depending on the mode configured by the RRC layer. Each RLC SDU segment 203 with its header 204 forms a RLC PDU 205 that is given to the lower layer. This RLC PDU is, from a MAC layer 104 point of view, a MAC SDU 206. As in this example, the MAC protocol does not perform any action on the MAC SDU; it transforms it directly into a MAC PDU or transport block 207 and transmits it directly to the physical layer 101.

### RLC layer transfer modes

The RLC sub layer has three working modes or transfer modes: transparent mode, unacknowledged mode and acknowledged mode (TM, UM and AM). The RLC sub layer is defined by 3GPP in 3GPP TS 25.322v6.1.0 "Radio Link Control (RLC) protocol specification", and a summary is given in 3GPP TS 25.301v6.0.0, cited above.

### Transparent data transfer:

This service transmits upper layer PDUs without adding any protocol information but may perform segmentation/reassembly on the received PDUs. The transparent mode is mainly used for very delay-sensitive services like speech.

The following functions are needed to support transparent data transfer:
- Segmentation and reassembly.
- Transfer of user data.
- SDU discard.

### Unacknowledged data transfer:

This service transmits upper layer PDUs without guaranteeing delivery to the peer entity.

The unacknowledged data transfer mode has the following characteristics:
- Detection of erroneous data: The RLC sub-layer shall deliver only those SDUs to the receiving upper layer that are free of transmission errors by using the sequence number check function.
- Immediate delivery: The receiving RLC sub-layer entity shall deliver a SDU to the upper layer receiving entity as soon as it arrives at the receiver.

The unacknowledged mode is used, for example, for certain RRC signalling messages. Examples of user services are the cell broadcast service (CBS), MBMS, voice over IP (VoIP) and potentially HSDPA.

The following functions are needed to support unacknowledged data transfer:
- Segmentation and reassembly.
- Concatenation.
- Padding.
- Transfer of user data.
- Ciphering.
- Sequence number check.
- SDU discard.

### Acknowledged data transfer:

This service transmits upper layer PDUs and guarantees delivery to the peer entity. In case RLC is unable to deliver the data correctly, the RLC at the transmitting side is notified. For this service, both in-sequence and out-of-sequence delivery are supported. In many cases an upper layer protocol can restore the order of its PDUs. As long as the out-of-sequence properties of the lower layer are known and controlled (i.e. the upper layer protocol will not immediately request retransmission of a missing PDU) allowing out-of-sequence delivery can save memory space in the receiving RLC.

The acknowledged data transfer mode has the following characteristics:
- Error-free delivery: Error-free delivery is ensured by means of retransmission based on acknowledgment messages sent by the AM RLC entity at the receiver side. The receiving RLC entity delivers only error-free SDUs to the upper layer.
- Unique delivery: The RLC sub-layer shall deliver each SDU only once to the receiving upper layer using duplication detection function.
- In-sequence delivery: The RLC sub-layer shall provide support for in-order delivery of SDUs, i.e., RLC sub-layer should deliver SDUs to the receiving upper layer entity in the same order as the transmitting upper layer entity submits them to the RLC sublayer.
- Out-of-sequence delivery: Alternatively to in-sequence delivery, it shall also be possible to allow that the receiving RLC entity delivers SDUs to upper layer in different order than submitted to RLC sublayer at the transmitting side.

The following functions are needed to support acknowledged data transfer:
- Segmentation and reassembly.
- Concatenation.
- Padding.
- Transfer of user data.
- Error correction.
- In-sequence delivery of PDUs.
- Duplicate detection.
- Flow Control.
- Protocol error detection and recovery.
- Ciphering.
- SDU discard.

### QoS control by the RLC layer

The description of the different modes of the RLC layer has shown that actually only the RLC AM provides true QoS control mechanisms. Indeed, this is the only mode where the transmitter is informed of the correct reception of the RLC SDUs thanks to the acknowledgement messages. With these messages, the RLC AM entity at the transmitter side can compute the SDU error rate and compare it with the Qos attribute (SDU error rate) set at the RB setup procedure. However, it is also interesting to note that the RLC AM entity at the receiver side has no knowledge about the QoS attributes and in particular about the SDU error rate.

In the other modes, the SDU error rate QoS attribute has to be controlled by indirect means. One possibility is the usage of QoS functions of upper layer protocols (e.g.

TCP/IP) but this solution is rather inefficient, as these protocols have not been developed specially for wireless systems. In UMTS, the QoS is usually controlled by other functions offered by lower layers like the power control function. This is particularly true for CS voice services where a TCP protocol cannot be used.

### RRC states

The RRC states have been introduced in 3GPP specifications. They describe typical UE behaviours and requirements according to identified and classified scenarios and are specified in 3GPP TS 25.331v6.23.0 "Radio Resource Control (RRC); Protocol specification".

The following states are specified in 3GPP
- Idle mode
- Cell_PCH
- URA_PCH
- Cell_FACH
- Cell_DCH

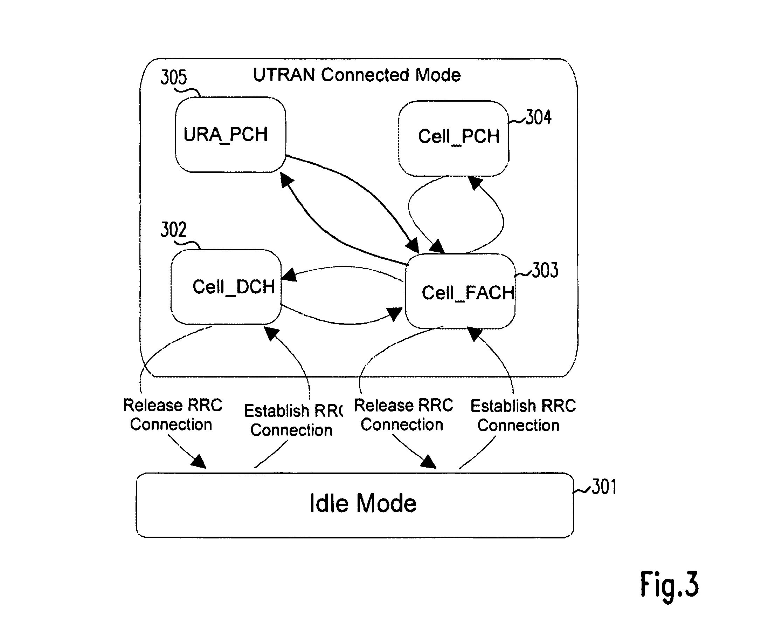

The different RRC states and the possible transitions between them are shown in Fig. 3.

The most common RRC state is the idle mode 301, which occurs after power on. In this state, the UE only monitors the paging channel and waits for an incoming call. In the following, each state is shortly described.

### CELL_DCH state 302:

The CELL_DCH state 302 is characterised by
- A dedicated physical channel is allocated to the UE in the uplink and in the downlink.
- The UE is known at cell level according to its current active set.
- The CELL_DCH-state is entered from the Idle Mode through the setup of an RRC connection, or by establishing a dedicated physical channel from the CELL_FACH state.

### CELL_FACH state 303:

The CELL_FACH state 303 is characterised by:
- No dedicated physical channel is allocated to the UE.
- The UE monitors a FACH channel in the downlink.
- The UE is assigned a default common or shared transport channel in the uplink (e.g. RACH) that it can use anytime according to the access procedure for that transport channel.
- The position of the UE is known by UTRAN at cell level according to the cell where the UE last made a cell update.

### CELL_PCH state 304:

The CELL_PCH state 304 is characterised by:
- No dedicated physical channel is allocated to the UE.
- The UE monitors a PICH every DRX cycle in order to detect page sent by the CN.
- The UE monitors the BCH in order to receive general system information
- No uplink activity is possible.
- The position of the UE is known by UTRAN at cell level according to the cell where the UE last made a cell update in CELL_FACH state.

### URA_PCH state 305:

The URA_PCH state is characterised by:
- No dedicated channel is allocated to the UE.
- The UE monitors a PICH every DRX cycle in order to detect page sent by the CN.
- The UE monitors the BCH in order to receive general system information..
- No uplink activity is possible.
- The location of the UE is known at the UTRAN Registration area level according to the URA assigned to the UE during the last URA update in CELL_FACH state.

### Idle state 301:

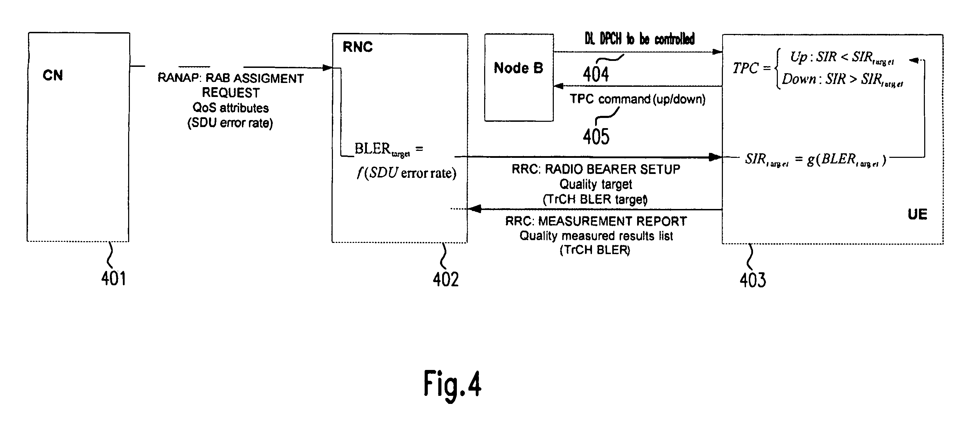

The idle state 301 is characterised by:
- No dedicated channel is allocated to the UE.
- The radio access network has no knowledge about a UE in idle mode. It doesn't know its existence nor its location.
- The UE monitors a PICH every DRX cycle in order to detect page sent by the CN.
- The UE monitors the BCH in order to receive general system information.
- No uplink activity is possible.
   Power control of dedicated channel in FDD
   A graphical description of the power control can be found in Figure 4. In FDD, dedicated channels (DPCH) are power controlled in the uplink and in the downlink in order to compensate the fluctuations of the received power of dedicated channel due to fast and slow fading. After receiving from the CN 401 the parameters of the RAB to be established and in particular its QoS attributes (RAB ASSIGNMENT REQUEST message as defined in 3GPP TS 25.413v6.2.05.9.0 "UTRAN lu interface RANAP signalling"), the RRC entity in the RNC 402 estimates the transport channel block error rate target (TrCH BLER target) for the DPCH that will carry the established RAB and signals this value to the peer RRC entity in the UE 403 during an RB setup procedure.
   The TrCH BLER target is used as a reference value by the RRC entity in the UE 403 and, thanks to an implementation dependent function, computes the corresponding SIR_target of the physical channel carrying this transport channel. The UE 403 measures the SIR of the DL physical channel to be controlled 404 and compares the results of this measurement with the computed target value in order to generate the appropriate TPC command 405 (up or down) that is transmitted in the uplink. Finally a quality measurement report can be sent by the UE 403 to the network with a RRC MEASUREMENT REPORT in order to inform the RNC 402 on the achieved transport BLER.
   Here again it can be noted that the UE is not informed about the actual value of the QoS attribute set by the CN 401. It further requires two mapping functions, which, if they occur to be inaccurate, may have a negative impact on the actual QoS experienced by the end user.

### Multimedia Broadcast Multicast Service (MBMS)

One potential field of application for this invention is MBMS, which is a new 3G service currently under standardisation within the 3GPP standardisation body. In MBMS, a service (video clip, data download, etc.) is broadcast over a predefined service area and is simultaneously received by one or many mobiles that previously subscribed to this service. An overview of MBMS of the architecture and functional aspects of MBMS is given in 3GPP TS 23.246v6.32.0 "MBMS Architecture and functional description" and the radio aspects of MBMS are currently standardised in 3GPP TS 25.346v6.10.0 "Introduction of the Multimedia Broadcast Multicast Service (MBMS) in the Radio Access Network (RAN) stage 2". The main interest of MBMS is that the same information can be transmitted to several mobiles at the same time with a point to multipoint transmission PTM. Therefore the network does not need to set up dedicated links to each of the interested mobiles in order to transmit the data. Several new logical channels are currently standardised by 3GPP in order to introduce MBMS services into the UMTS system. The MTCH (MBMS Traffic Channel) is provided for carrying the MBMS service data content itself. If only a few UEs are interested in the broadcast service, the network may rely on a normal DPDCH physical channel after establishment of separate dedicated radio links (point-to-point transmission PTP) or on a S-CCPCH physical channel carrying a FACH transport channel in case of PTM transmission towards several UEs. Finally, a new logical control channel is introduced. The MCCH (MBMS Control Channel) broadcasts the current MBMS configuration and signals MBMS specific parameters or messages. Depending on the evolution of the standardisation process, more logical channels might be introduced in the future by 3GPP.

### Soft and Selective combining

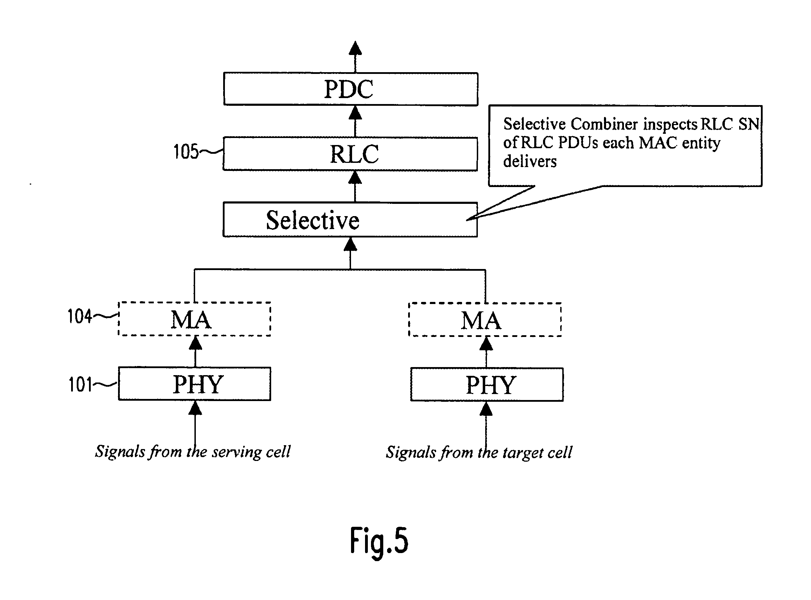

In order to improve the reception quality at the UE, two techniques are currently under investigation in 3GPP. The general principle of soft and selective combining is the same. Both techniques rely on the reception of the same information from more than one cell. Soft combining is similar to the well-known soft handover scenario already introduced in R99 of UMTS, where a UE combines the soft bits received from several cells at the physical layer provided that the radio links from all cells are sufficiently synchronised in time. In the case of selective combining, the combining process takes place at the RLC layer. The principle of selective combining is shown in Fig. 5. With this technique, several links from several cells are received and each link undergoes an independent reception process up to the RLC layer. Therefore the RLC receives several times the same RLC PDUs that are identified by their sequence number (SN). As the different radio links are non-correlated, the probability of receiving correct RLC PDUs increases with the number of radio links. By selecting error-free PDUs from different radio links and combining them, a data stream with lower PDU error rate or error ratio may be obtained.

### Point to point repair mechanism

One of the principal services envisaged for MBMS is file download. With this service, a population (i.e. plurality of UEs) receives simultaneously the same file that can be a game, ring tones, a new application, software upgrades etc. Depending on the charging policy of the operators, it might be necessary to ensure a 100% download success rate of the file whereas with a streaming service some losses may be acceptable as they will only cause some degradation of the quality.

In order to cope with this, 3GPP SA2 and SA4 are currently specifying an application level procedure, where the UE can require the retransmission of the missing IP packets over a PTP dedicated connection or the complete retransmission of the session.

From a UTRAN point of view, this procedure cannot be used for fine tuning of the radio network as this information is generated by the application layer at the UE side and its destination should be the peer entity in the operator CN responsible for generating the MBMS data (BM-SC).

In the document R2-040783 presented by Qualcomm at the 3GPP TSG RAN WG2 MBMS adhoc meeting in Budapest in April 2004, it has been proposed to introduce a reporting mechanism for MBMS where a statistically representative set of UEs receiving MBMS is put in cell_FACH, and these UEs report to the network the transport channel BLER observed. This proposal does not consider the control of the QoS at the RLC layer and does not propose any detailed quality report mechanism.

WO 2004/040928 A1, "Reporting for multi-user services in wireless networks", focuses on a reporting mechanism in the application layer for RTP/RTCP protocols. It does not teach a reporting mechanism between UE and RNC (RRC layer).

In the current state of the MBMS standardisation within 3GPP, no direct QoS control mechanism over the air interface has been developed for a PTM transmission except the point-to-point repair mechanism. However the point-to-point repair mechanism is an application level procedure, which cannot be used to control transmission parameters related to the radio access network (transmission power, code rate, etc). As a matter of fact, in its current state, MBMS relies upon a "blind" transmission, where the transmission parameters are based not on the actual requirements and needs of the receiving stations but on some empiric rules, as no quality feedback reports are sent from the terminals to the radio access network.

### This gap in the functionality in MBMS has two major consequences:

First, no efficient adaptation of the transmission parameters of an MBMS session with respect to the actual terminal requirements is possible. In case of an insufficient transmission power, most of the UEs will receive the MBMS services with a high error rate and, if allowed by the application layer, will require a point-to-point repair session in order to recover the losses. This will create significant traffic in the uplink and in the downlink, which will severely decrease the spectrum efficiency of MBMS. Moreover as the point-to-point repair procedure is an application level procedure, this will be completely transparent to the UTRAN. It will see this traffic as signalling messages designated for the application layer. Therefore the UTRAN will not be able to use this procedure to adapt the radio parameters to the actual MBMS reception quality and will certainly use again the same parameters if another MBMS session with the same characteristics is to be transmitted.

Another major problem related to the lack of uplink feedback is the limitation in the testing of MBMS capable UEs. In 3GPP, all main functions have to conform to the specifications and shall be tested in order to guarantee a certain quality level. MBMS shall not be an exception to this rule, as new features will be introduced in the lower layers of the UE; reception of high data rate in RRC idle mode, URA_PCH and cell_PCH and cell_FACH modes, MCCH reception, selective combining, inter-frequency measurement in presence of MBMS just to name a few. As MBMS reception shall be provided in all RRC states and in particular in RRC idle mode, a methodology should be derived that would enable the conformance testing of MBMS in this mode. Usually UEs are tested with the help of a special loop back mode, where the DL traffic is directly sent back in the uplink to the test equipment that is simulating the UTRAN. This enables the test equipment to compare the received and processed signal with the original and to easily compute test metrics such as the transport channel BLER. The problem with MBMS in idle, cell_PCH, URA_PCH and also cell_FACH is that there is no uplink or only little bandwidth is available. Therefore it is impossible to carry the envisaged DL MBMS data rates (64kbps to 256kbps services) in the uplink. As a matter of fact, there is today no possibility to test MBMS UEs with the current version of the specifications.

US 2003/0207696 A1 relates to Multimedia Broadcast and Multicast Service (MBMS) in a wireless communication system. It provides a method for processing data for a transmission through a plurality of User Equipments. The UEs may be designed with the capability to receive MBMS services via the HSDPA channel structure. However, link adaptation is not performed dynamically for broadcast services, and packet-level feedback from the individual UEs would not be required if appropriate, so that the UEs do not need to report channel quality information or acknowledgement data.

It is therefore the object of the present invention to propose a mechanism for enabling efficient QoS control (by adapting the radio transmission parameters of MBMS) in the radio access network and for also allowing the testing of a specific UE with regard to the new functionalities introduced by MBMS.

This object is achieved by a method according to claim 1, a mobile terminal according to claim 23, a radio network controller according to claim 25 and a test system according to claim 28. Advantageous embodiments are subject-matter of the dependent claims.

A new measurement capability in the RLC layer is disclosed which may provide the possibility to control QoS in RLC UM mode when an MBMS service is received over a PTM transmission.

It is proposed to measure the SDU error rate at the RLC layer in UM when a PTM transmission is used. The SDU error rate is a QoS attribute defined by the CN.

Such a new measurement has the following benefits in comparison to the existing transport channel BLER control: In MBMS, selective combining might be used and the UE will receive the same MBMS service from several Node Bs. The combining of the different transport channels from the different Node Bs is performed at the RLC layer based on the sequence number of the RLC SDUs. This case implies that several decoding chains from the physical layer up to the point where the combining is performed in the RLC exist in the UE and thus several instances of the same transport channel received from different Node Bs exist in the UE. A quality measurement at the MAC layer (transport channel level) would be very difficult since the number of reports would be equal to the number of cells considered for selective combining. Moreover these values do not give reliable QoS related information, as a high level of transport channel BLER does not necessarily imply a degradation of the QoS. By combining two or more data flows at the RLC layer, the selective combining approach may provide an acceptable RLC SDU error rate despite of the relatively high BLERs.

By introducing a RLC SDU measurement capability in RLC UM, it is possible for the RNC to adapt the transmission parameters of MBMS. If the RNC collects a significant amount of reports indicating an unacceptable QoS degradation within a specific cell, it might try to improve the situation by either increasing the transmission power of the associated S-CCPCH, change its spreading factor, add more redundancy (decrease the code rate) of the FACH transport channel or change the way the logical channel of interest (e.g MTCH, MCCH) is multiplexed onto transport channels and physical channels. For instance, in case of MCCH, it would be possible to map it exclusively onto a FACH transport channel that is exclusively mapped onto one S-CCPCH.

Moreover, in order to achieve the required QoS, the RNC could also vary the transmission power or the time offset of the MBMS service of interest in the neighbouring cell or initiate its transmission in order to improve the performance of soft or selective combining.

This proposal enables also the testing of MBMS capable UEs in non Cell_DCH mode, which will be the most typical case, by transmitting related reports and receiving and evaluating these reports by the test system.
Figure 1 shows an overview of UMTS Air Interface Layers.
Figure 2 depicts the Data transfer in a non-transparent RLC and a transparent MAC sublayer.
Figure 3 illustrates RRC states and their transitions.
Figure 4 depicts outer and inner loop downlink power control for FDD.
Figure 5 illustrates the selective combining principle at the RLC layer.
Figure 6 shows an embodiment of an RLC error rate measurement capability.
Figure 7 illustrates the signalling exchange between different layers for the error rate measurement shown in Fig. 6.
Figure 8 illustrated a conventional RRC connection establishment procedure.
Figure 9 depicts an anonymous quality measurement report procedure.
Figure 10 shows a schematic of a mobile terminal (UE) to which the method according to the invention can be applied.
Figure 11 illustrates a schematic of a RNC which can serve as a counterpart for the mobile terminal shown in Fig. 10.
Figure 12 depicts a schematic of a test system which can be used to test a mobile terminal as shown in Figure 10.

Although the invention is explained below for the example and with the terminology of a UMTS network, it should be understood that this is not limiting. The principle underlying the invention could equally be applied to wireless networks of other standards by replacing UMTS terms with appropriate equivalents.

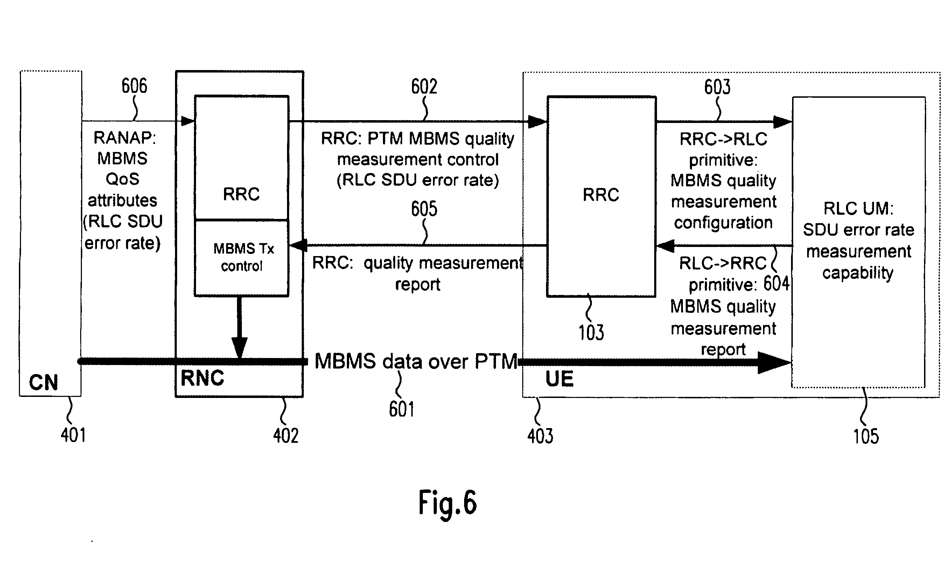

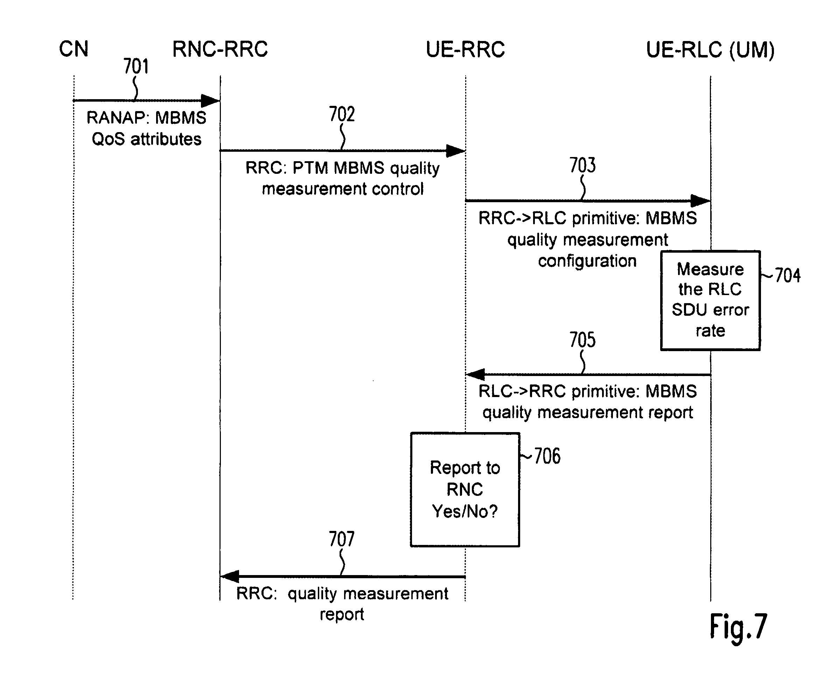

A summary of the different new elements is shown in Figure 6. Fig.7 depicts the signalling messages exchanged between the different layers.

As explained in the prior art section, no feedback mechanism to the UTRAN exists in the current version of MBMS. The main idea of the invention is to introduce a new measurement capability at the RLC layer in UM when a PTM transmission is used. This measurement is an SDU error rate measurement, as the SDU error rate is a QoS attribute defined by the CN. In PTP mode (over DPCH) this measurement is not needed as there already exists a QoS control mechanism for dedicated connections.

Referring to Fig. 6, arrow 601 symbolizes a MBMS data transmission from the CN via the RNC and a PTM connection to a population (plurality) of UEs, of which one is shown with reference numeral 403. The MBMS is associated with a set of QoS attributes including a target SDU error rate, which is informed to the RNC by the CN, symbolized by arrow 606. The RLC is configured in un-acknowledged mode for a PTM transmission. UE 403 is configured to provide a SDU error rate measurement capability in its RLC layer 105.

Although this measurement could have a fixed configuration, it is advantageous to define a downlink broadcast RRC signalling 602 that configures this measurement similar to the RRC MEASUREMENT CONTROL message (see section 8.4.1 and 10.2.17 in 3GPP TS 25.331v6.23.0, cited above). Furthermore this RRC message should be associated to a specific MBMS PTM RAB and broadcast to all UEs potentially receiving the corresponding MBMS service.

Possible elements of this RRC PTM MBMS QUALITY MEASUREMENT CONTROL message could be
- MBMS service or MBMS PTM RAB identification
- The length of the measurement window in terms of TTI or number of received RLC SDUs
- A quality threshold Q_threshold (for event-triggered measurement) or
- A reporting period (for periodic measurement).

The measurement control message could also comprise information from which a transmission time of the quality measurement report is derived by the UEs. In this case the exact instance of time would have to be individually randomized by the UEs within a certain interval in order to avoid conflicts in the uplink resources.

After reception of the measurement control message, the RRC is able to configure the RLC UM by means of a new primitive 603 between the RRC layer 103 and the RLC layer 105. The RLC layer 105 in turn informs the RRC layer 103 about the results of the SDU error rate measurement by means of another primitive 604. The RRC layer 103 is then able to generate a quality measurement report 605 based on the information received from the RLC in the primitive, and to send it to the RNC.

The measurement report may comprise the measured value of the SDU error rate or ratio. Alternatively it may comprise information whether the value exceeds a defined threshold or not. Furthermore the quality measurement report may comprise information about the identity of the MBMS and/or the MTCH. When combining is applied to the MBMS data, the quality measurement report could further comprise information about the type of combining applied, the cells considered or used for combining (i.e. the cells from which MBMS data is received for the purpose of combining), and about the reception quality of the wireless links used for combining (i.e. the SIR of the physical channels or in the case of selective combining the SDU error rates before combining).

RNC 402 receives measurement reports from a plurality of UEs receiving the MBMS and can adjust transmission parameters of the MTCH, like transmission power, spreading factor, code rate or multiplexing parameters accordingly in order to secure the QoS of the MBMS as received from the CN.

Referring now to Fig. 7, an exemplary timing of the proposed method is illustrated. Firstly, the RNC receives from the CN information about QoS attributes associated with a MBMS broadcast service in the area of the RNC. The RRC layer of the RNC generates a PTM MBMS QUALITY MEASUREMENT CONTROL message and broadcasts it in step 702 in the broadcast area of the MBMS. The message can be either broadcast over BCCH, over CCCH or over MCCH. The latter solution provides the advantage of easier linking between a measurement control message and a specific MBMS service. A particular UE which is also receiving the data from the associated MBMS then receives this message in its RRC layer. In step 703, the RRC layer sends a primitive to the RLC layer to configure the SDU error rate measurement, which is subsequently executed in box 704. Although depicted as singular box, this measurement may be repeated for a specified time according to the configuration or until it is disabled by another primitive from the RRC layer. Consequently, one or more primitives are sent from the RLC layer to the RRC layer with step 705 comprising results from the SDU error rate measurements. Alternatively and depending on the implementation, the RLC layer may prepare a complete measurement report and send it to the RRC layer for transmission to the RNC in step 705. The RRC layer of the UE receives the measurement results or reports, respectively, prepares reports if necessary and decides in box 706 which reports are to be sent to the RNC with step 707.

As the main constraints in MBMS concern air capacity and the UE battery power, the quality measurement should only be reported when necessary. Although the measurement report could be configured for periodic transmission, it is advantageous to configure in the RRC a so-called event-triggered measurement. In both options, the UE computes the number of SDUs in error within the measurement window indicated in the configuration message. The number of corrupted SDUs may further be related to the total number of received SDUs in the same measurement window. Alternatively, the erroneous or corrupted SDU segments may be counted and related to the total number of received SDU segments. With an event-triggered measurement, the UE reports its value with quality measurement report 605 only if a specific threshold (Q_threshold) is exceeded, whereas with a periodic measurement, the UE reports the measurement results periodically. The quality threshold Q_threshold could be either a percentage value or a number of corrupted RLC SDUs that should not to be exceeded within the measurement window. In case of high uplink interference or for other reason, this quality reporting could be disabled by either setting Q_threshold to an infinite value or by not broadcasting the measurement configuration message. In another embodiment, it may be defined that a report is sent when the measured SDU error rate exceeds or falls below the threshold by a pre-defined margin. This provides an additional parameter for a trade-off between efficient use of transmission capacity and transmission reliability.

Periodical reporting could for example be used if the UE already has a connection to the network for some other purpose and can use it to piggyback this measurement report. A UE in CELL_DCH (DCH channels exists in DL and UL) could use the already dedicated connection to send measurement reports to the RNC. In this case it might be interesting to reconfigure the measurement and select a periodic measurement in order to give to the network even more accurate information on the reception quality.

I another alternative, the CELL update message could also be modified in order to permit UEs in RRC connected mode (except cell_DCH) to report the same information.
Another variant is to reuse the same message for UE in connected mode. In this case the identification of the UE is provided by the dedicated channel used to carry this information (DCCH).

In another advantageous embodiment, an activation command is introduced. The network uses the activation command to request the reporting of the quality measurement that has previously been configured but not activated. This reporting mode could be applied to either an event-triggered measurement or a periodic measurement. It is also possible to de-activate the reporting later by sending a respective command, which might be the activation command with a respective flag reset. Such an activation command could be broadcast over the same channels as the configuration command.

The computation of the measurement itself for the RLC UM requires no undue processing power or implementation effort, as this can be easily done by using already existing RLC UM functionalities. Indeed the RLC UM shall already check the validity of the SDUs it transmits to the higher layer by using services of the MAC layer such as the CRC check, which indicates if a RLC PDU has been received in error or not and by using the sequence numbering in order to benefit from the selective combining gain. Furthermore, the RLC UM shall discard corrupted RLC SDUs and transmit only the RLC SDUs that are believed to be correct.

In one alternative the report itself could comprise only a flag, indicating the triggering event (Q_threshold exceeded) or alternatively the actual value of the SDU error rate.

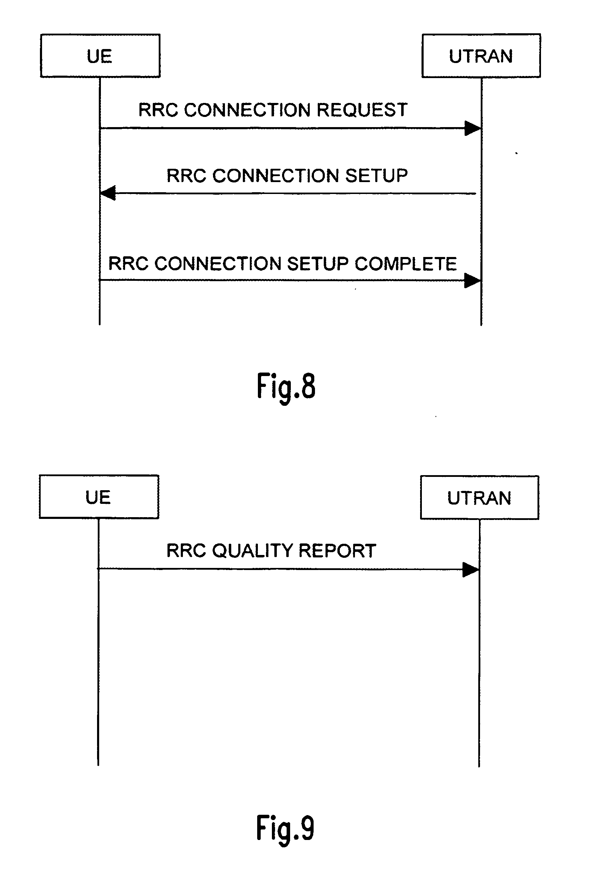

For the transmission of the report, existing signalling could be reused. If the UE is in RRC idle mode, it has no connection to the network and is completely unknown to the network. Therefore it needs to perform first an RRC establishment connection request procedure and to transit to Cell_FACH mode. A UE in connected mode (URA_PCH, Cell_PCH and Cell_FACH), on the other hand, needs to perform a cell update procedure as it has already an RRC connection with the RNC. An RRC establishment procedure implies intensive signalling between the UE and the RNC over the air interface as shown in Figure 8.

In an alternative, advantageous embodiment, anonymous reporting as shown in Fig. 9 is applied. In this new measurement reporting type the UE sends the quality measurement report to the network in an anonymous fashion. This will enable the UE to send a quality measurement report to the network or to a UE testing equipment in idle mode without changing its RRC mode. Instead of establishing an RRC uplink connection, the UE sends a specific message to the network on a Random Access Channel, RACH, similar to the RRC message "Measured results on RACH" (see section 10.3.7.45 of 3GPP TS 25.331v6.23.0, cited above), where the reception quality of the neighbouring cells is reported. Therefore the identity of the UE does not have to be transmitted to the RNC, and any dedicated channel assignment is unnecessary. Consequently the quality measurement report cannot be associated with the identity of the UE. This is also not necessary, as the quality of a broadcast signal is reported, and the RNC will react on a statistical evaluation of all received quality measurement reports associated with the same MBMS or MTCH. Further teaching regarding anonymous reporting can be found in the co-pending European Patent Application with attorney docket number EP32466.

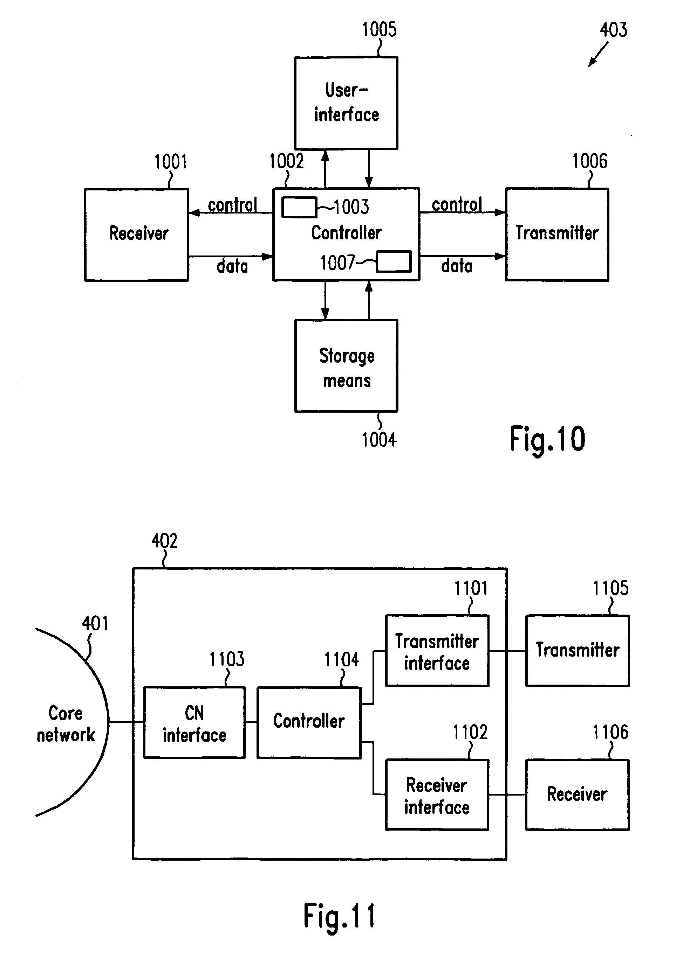

Fig. 10 illustrates the structure of a mobile terminal (UE) 403. A mobile terminal may for example be a conventional mobile phone, a smart phone, or a respective module in any acoustic, video or data processing device. It might even be a module mounted on a vehicle and connected to a processor therein. It comprises a receiver 1001 and a controller 1002. It may further comprise a transmitter 1006, a user interface 1005 including display, keys and acoustic devices and storage means 1004 for storing executable instructions for the controller 1002 as well as any other data. Controller or Controlling means 1002 may comprise one or more processors for protocol interaction, signal processing and control of other components. In order to execute the method according to the present invention, controller 1002 further comprises determining means 1003 for determining the error rate associated with MBMS SDUs received by the RLC in UM. The determining means could be implemented in hardware logic, but will in most cases be implemented in instructions which perform this task when they are executed on a processor of controlling means 1002. Controlling means 1002 may further comprise reporting means 1007 (in hardware or executable instructions) for preparing a report comprising information about the results obtained by determining means 1003, and for arranging for its transmission to a RNC 402 (i.e. the entity controlling the radio link for the downlink data transmission) via transmitter 1006.

Instructions which cause controlling means 1002 to carry out the methods described above can be stored in a non-volatile part of storage means 1004, for example read only memory (ROM), programmable read only memory (PROM), EPROM, EEPROM or FLASH. The instructions may be loaded to such semiconductor storage media from other computer-readable storage media like magnetic disk, magnetic tape or optical disk.

Fig. 11 illustrates a RNC 402 which could act as a counterpart to UE 403. It comprises a transmitter interface 1101 to connect it to a transmitter 1105, a receiver interface 1102 to connect it to a receiver 1106, a core network interface 1103 to connect it to a CN 401 and controlling means or a controller 1104 which controls the interfaces and performs protocol tasks and signal processing. Controller 1104 is configured, by special hardware or by instructions executed on a processor, to receive MBMS data and associated QoS information form core network 401 via CN interface 1103 and to establish a PTM connection on the MTCH for the MBMS. Controller 1104 further generates a measurement control message as described further above and arranges for its broadcasting via transmitter interface 1101 and transmitter 1105. It receives quality measurement reports from UEs via receiver 1106 and receiver interface 1102 and adjusts transmission parameters of the MTCH carrying the MBMS accordingly in order to provide the QoS as specified in the information received from CN 401 via core network interface 1103.

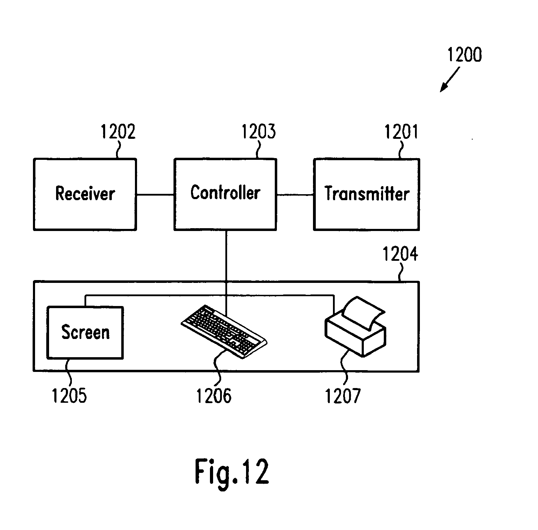

Fig. 12 illustrates a test system 1200 for testing MBMS related functionality of UEs. It comprises a transmitter 1201, a receiver 1202, a controller or controlling means 1203 and user interface 1204 comprising for example a LCD or CRT screen 1205, a keyboard 1206 and a printer 1207. Test system 1200 behaves more or less like a RAN comprising RNC 402 described in the section above. However, contrary to the functionality of the RNC as described above, tester 1200 does not adjust transmission parameters for the MBMS based on the measurement reports from the UE under test. Instead it prepares a test report about the UE, based on the information comprised in the received measurement reports and outputs the test report via user interface 1204. To this end it also may vary systematically various kinds of transmission parameters, add noise or simulate propagation effects like fading in order to test the behaviour of the UE under these conditions.

Appendix: Abbreviations

| **Abbreviation** | **Description** |
|---|---|
| 3GPP | 3rd Generation Partnership Project |
| AM | Acknowledged Mode |
| BCCH | Broadcast Control Channel |
| BCH | Broadcast Channel |
| BLER | Block Error Ratio |
| BMC | Broadcast / Multicast Control |
| BM-SC | Broadcast-Multicast Service Centre |
| CBS | Cell Broadcast Service |
| CCCH | Common Control Channel |
| CN | Core Network |
| CS | Circuit Switched |
| DCCH | Dedicated Control Channel |
| DCH | Dedicated Channel |
| DL | Downlink |
| DPCH | Dedicated Physical Channel |
| DPDCH | Dedicated Physical Data Channel |
| DRX | Discontinuous Reception |
| FACH | Forward Access Channel |
| FDD | Frequency Division Duplex |
| HSDPA | High Speed Downlink Packet Access |
| IE | Information Element |
| LA | Location Area |
| MAC | Medium Access Control |
| MBMS | Multimedia Broadcast Multicast Service |
| MCCH | MBMS Control Channel |
| MTCH | MBMS Traffic Channel |
| PCH | Paging Channel |
| PDCP | Packet Data Convergence Protocol |
| PDU | Protocol Data Unit |
| PICH | Page Indicator Channel |
| PTM | point-to-multipoint transmission |
| PTP | point-to-point transmission |
| QoS | Quality of Service |
| RA | Registration Area |
| RAB | Radio Access Bearer |
| RACH | Random Access Channel |
| RAN | Radio Access Network |
| RANAP | Radio Access Network Application Part |
| RB | Radio Bearer |
| RLC | Radio Link Control |
| RNC | Radio Network Controller |
| RRC | Radio Resource Control |
| S-CCPCH | Secondary Common Control Physical Channel |
| SDU | Service Data Unit |
| SIR | Signal-to-Interference Ratio |
| SN | Sequence Number |
| SRB | Signalling Radio Bearer |
| TCP | Transmission Control Protocol |
| TM | Transparent Mode |
| TPC | Transmission Power Control |
| TrCH | Transport Channel |
| TTI | Transmission Timing Interval |
| UE | User Equipment |
| UM | Un-acknowledged Mode |
| UMTS | Universal Mobile Telecommunications System |
| URA | User Registration Area, UTRAN Registration Area |
| UTRAN | Universal Terrestrial Radio Access Network |
| VolP | Voice over Internet Protocol |

## Claims

1. A method for controlling the quality of service of a broadcast or multicast service in a mobile terminal of a wireless communication system, comprising the steps of:
a) receiving service data units via a wireless link of the communication system; and
b) determining an error rate associated with said service data units (704),
**characterized in that**
said step b) is carried out in a radio link control layer in unacknowledged data transfer mode, and
after step b), by a step c) (707) of sending a measurement report based on said error rate to an entity controlling said wireless link, and
by adjusting transmission parameters of the transmission of said service data units based on said measurement report.

2. The method according to claim 1, wherein said error rate is a ratio of a number of corrupted service data units received in a given time interval to a total number of service data units received in the same time interval.

3. The method according to claim 1, wherein said service data units are segmented for transmission via said wireless link, and said error rate is a ratio of a number of corrupted service data unit segments received in a given time interval to a total number of service data unit segments received in the same time interval.

4. The method according to one of claims 1 to 3, wherein said report is sent by establishing an uplink connection in said wireless communication system from said mobile terminal to said controlling entity.

5. The method according to one of claims 1 to 3, wherein said report cannot be associated with an identity of said mobile terminal by said entity.

6. The method according to one of the claims 1 to 5, wherein said measurement report comprises a value associated with said determined error rate.

7. The method according to one of the claims 1 to 5, wherein said measurement report comprises information whether said error rate exceeds a defined threshold.

8. The method according to one of the claims 1 to 7, further comprising, before step a), a step d) (702) of receiving a message comprising configuration information concerning at least one of said determining step b) and said sending step c).

9. The method according to claim 8, wherein said message is received from a multimedia broadcast multicast service control channel, a broadcast control channel or a common control channel.

10. The method according to one of the claims 1 to 9, further comprising, prior to said step c), a step e) of receiving an activation command, wherein said measurement report is sent only after activation by said activation command.

11. The method according to one of the claims 8 to 10, wherein said measurement report is sent at a time derived from information comprised in said message.

12. The method according to one of the claims 1 to 10, wherein said measurement report is sent periodically.

13. The method according to one of the claims 1 to 10, wherein said measurement report is sent when said error rate exceeds a pre-defined threshold.

14. The method according to claim 7 or 13, wherein said threshold is derived from a quality of service attribute associated with said broadcast or multicast service.

15. The method according to claim 14, wherein said threshold is equal to said quality of service attribute.

16. The method according to claim 14, wherein said threshold is below or above said quality of service attribute by a pre-defined margin.

17. The method according to one of the preceding claims, further comprising the steps of
sending, before step b), a primitive for the configuration of an error rate measurement from a radio resource control layer of the same mobile terminal to the radio link control layer (703); and
sending, after step b), a primitive from the radio link control layer to the radio resource control layer (705) comprising a value representing the result of said determining step b).

18. The method according to one of the claims 1 to 17, further comprising, before step b), the steps of
f) receiving service data units of said broadcast or multicast service via at least one more wireless link of the communication system; and
g) combining data received in step f) via different wireless links and carrying the same information.

19. The method of claim 18, wherein said report further comprises information about a type of said combining.

20. The method according to claim 18 or 19, wherein said report comprises information on cells considered for said combining.

21. The method according to one of the claims 18 to 20, wherein said report comprises information on a reception quality of one or more cells considered for said combining.

22. A computer-readable storage medium, having stored thereon instructions, which, when executed on a processor of a mobile terminal cause the mobile terminal to perform the method according to one of the claims 1 to 21.

23. A mobile terminal (403) for use in a wireless communication system, comprising:
receiving means (1001) for receiving service data units via said wireless communication system; and
controlling means (1002) adapted to control said receiving means,
said controlling means (1002) comprising determining means (1003) for determining an error rate associated with said service data units,
**characterized in that**
the determining means is adapted to determine the error rate in a radio link control layer in an unacknowledged data transfer mode, and
the mobile terminal is adapted to send a measurement report based on said error rate to an entity controlling said wireless link.

24. The mobile terminal according to claim 23, wherein said determining means (1003) is configured to determine a ratio of a number of corrupted service data units received in a given time interval to a total number of service data units received in the same time interval, as said error rate.

25. A radio network controller (402) for use in a wireless communication system, comprising:
a transmitter interface (1101) for connecting it to at least one transmitter (1105);
a receiver interface (1102) for connecting it to at least one receiver (1106);
a core network interface (1103) for connecting it to a core network (401) of said wireless communication system; and
controlling means (1104) for controlling said interfaces (1101, 1102, 1103), said transmitter (1105) and said receiver (1106),
said radio network controller (402) being further configured
to establish a multimedia broadcast multicast service in said wireless communication system by transmitting service data units via said transmitter (1105);
to transmit a message via said transmitter (1105), the message comprising configuration information concerning the generation in a radio link control layer in unacknowledged mode of a measurement report based on an error rate associated with said service data units ;
to receive reports about error rates associated with said service data units via said receiver (1106); and
to adapt transmission parameters for the transmission of said service data units depending on information comprised within said reports,
wherein said reports comprise information about an error rate associated with said service data units.

26. The radio network controller (402) according to claim 25, wherein said transmission parameters comprise a transmission power, a spreading factor, a code rate or multiplexing parameters.

27. A wireless communication system comprising
at least one mobile terminal (403) according to claim 23 or 24 and
a radio network controller (402) according to claim 25 or 26.

28. A test system (1200) for the test of a mobile terminal (403), comprising:
a transmitter (1201) for sending data to said mobile terminal (403);
a receiver (1202) for receiving data from said mobile terminal (403);
controlling means (1203) adapted to control said receiver (1202) and said transmitter (1201); and
a user interface (1204) for controlling functions of the test system and for outputting test results,
said controlling means (1203) being further configured
to establish a multimedia broadcast multicast service to said mobile terminal by transmitting service data units via said transmitter (1201);
to transmit a message to said mobile terminal (403) via said transmitter (1201), the message comprising configuration information concerning the generation in a radio link control layer in unacknowledged mode of a measurement report based on an error rate associated with said service data units;
to receive reports via said receiver (1202) from said mobile terminal, UE, about error rates associated with said service data units; and
to output a test report via said user interface, based on information comprised within said reports,
wherein said reports comprise information about an error rate associated with said service data units.

## Patentansprüche

1. Verfahren zum Steuern der Dienstqualität eines Broadcast- oder Multicast-Dienstes bei einem mobilen Endgerät in einem drahtlosen Kommunikationssystem,
wobei das Verfahren die folgenden Schritte umfasst:
a) Empfangen von Dienstdateneinheiten über eine drahtlose Verbindung des Kommunikationssystems; und
b) Bestimmen einer mit den Dienstdateneinheiten verbundenen Fehlerhäufigkeit (704);
**gekennzeichnet**
**dadurch, dass** der Schritt b) in einer Funkverbindungssteuerungsschicht in einem Datenübertragungsmodus ohne Bestätigung erfolgt; und
nach Schritt b) durch einen Schritt c) (707) des Sendens eines Messprotokolls auf der Basis der Fehlerhäufigkeit an eine Einheit, die die drahtlose Verbindung steuert, und
durch das Einstellen der Übertragungsparameter der Übertragung der Dienstdateneinheiten auf der Basis des Messprotokolls.

2. Verfahren nach Anspruch 1, wobei die Fehlerhäufigkeit ein Verhältnis von einer Anzahl fehlerhafter Dienstdateneinheiten, die in einem bestimmten Zeitintervall empfangen wurden zu einer Gesamtzahl an Dienstdateneinheiten ist, die in demselben Zeitintervall empfangen wurden.

3. Verfahren nach Anspruch 1, wobei die Dienstdateneinheiten zur Übertragung über die drahtlose Verbindung segmentiert werden, und die Fehlerhäufigkeit ein Verhältnis von einer Anzahl an fehlerhaften Dienstdateneinheitssegmenten, die in einem bestimmten Zeitintervall empfangen wurden, zu einer Gesamtzahl an Dienstdateneinheitssegmenten ist, die in demselben Zeitinterall empfangen wurden.

4. Verfahren nach einem der Ansprüche 1 bis 3, wobei das Protokoll durch Bilden einer Aufwärtsverbindung in dem drahtlosen Kommunikationssystem von dem mobilen Endgerät zu der Steuereinheit gesendet wird.

5. Verfahren nach einem der Ansprüche 1 bis 3, wobei das Protokoll durch die Einheit nicht einer Identität des mobilen Endgeräts zugeordnet werden kann.

6. Verfahren nach einem der Ansprüche 1 bis 5, wobei das Messprotokoll einen mit der bestimmten Fehlerhäufigkeit verbundenen Wert umfasst.

7. Verfahren nach einem der Ansprüche 1 bis 5, wobei das Messprotokoll Informationen enthält, ob die Fehlerhäufigkeit einen definierten Schwellenwert überschreitet.

8. Verfahren nach einem der Ansprüche 1 bis 7, das weiterhin vor Schritt a) einen Schritt d) (702) des Empfangens einer Nachricht aufweist, die Konfigurationsinformationen betreffend mindestens einen der Schritte b) Bestimmen und c) Senden enthält.

9. Verfahren nach Anspruch 8, wobei die Nachricht von einem Multimedia Broadcast Multicast Service Control Channel, einem Broadcast Control Channel oder einem Common Control Channel empfangen wird.

10. Verfahren nach einem der Ansprüche 1 bis 9, das weiterhin vor dem Schritt c) einen Schritt e) des Empfangens eines Aktivierungsbefehls umfasst, wobei das Messprotokoll erst nach Aktivierung durch den Aktivierungsbefehl gesendet wird.

11. Verfahren nach einem der Schritte 8 bis 10, wobei das Messprotokoll zu einem Zeitpunkt gesendet wird, der aus Informationen abgeleitet wird, die in der Nachricht enthalten sind.

12. Verfahren nach einem der Schritte 1 bis 10, wobei das Messprotokoll periodisch gesendet wird.

13. Verfahren nach einem der Ansprüche 1 bis 10, wobei das Messprotokoll gesendet wird, wenn die Fehlerhäufigkeit einen vordefinierten Schwellenwert überschreitet.

14. Verfahren nach einem der Ansprüche 7 oder 13, wobei der Schwellenwert von einem Dienstqualitätsmerkmal abgeleitet wird, das mit dem Broadcast- oder Multicast-Dienst verbunden ist.

15. Verfahren nach Anspruch 14, wobei der Schwellenwert gleich dem Dienstqualitätsmerkmal ist.

16. Verfahren nach Anspruch 14, wobei der Schwellenwert um eine vordefinierte Spanne unter oder über dem Dienstqualitätsmerkmal liegt.

17. Verfahren nach einem der vorhergehenden Ansprüche, das weiterhin die folgenden Schritte umfasst:
Senden, vor Schritt b), eines Grundelements für die Konfiguration einer Fehlerhäufigkeitsmessung aus einer Funkressourcensteuerungsschicht desselben mobilen Endgeräts an die Funkverbindungssteuerungsschicht (703); und
Senden, nach Schritt b), eines Grundelements aus der Funkverbindungssteuerungsschicht an die Funkressourcensteuerungsschicht (705), das einen Wert enthält, der das Ergebnis des Bestimmungsschritts b) repräsentiert.

18. Verfahren nach einem der Ansprüche 1 bis 17, das weiterhin, vor Schritt b), die folgenden Schritte umfasst:
f) Empfangen von Dienstdateneinheiten des Broadcast- oder Multicast-Dienstes über mindestens eine weitere drahtlose Verbindung des Kommunikationssystems; und
g) Kombinieren der in Schritt f) über verschiedene drahtlose Verbindungen empfangenen Daten und Tragen derselben Informationen.

19. Verfahren nach Anspruch 18, wobei das Protokoll weiterhin Informationen über eine Art des Kombinierens enthält.

20. Verfahren nach Anspruch 18 oder 19, wobei das Protokoll Informationen zu Zellen enthält, die für das Kombinieren in Betracht kommen.

21. Verfahren nach einem der Ansprüche 18 bis 20, wobei das Protokoll Informationen zu einer Empfangsqualität von einer oder mehreren Zellen enthält, die für das Kombinieren in Betracht kommen.

22. Computerlesbares Speichermedium, auf dem Befehle gespeichert sind, die bei Ausführung in einem Prozessor eines mobilen Endgeräts das mobile Endgerät dazu veranlassen, das Verfahren nach einem der Ansprüche 1 bis 21 auszuführen.

23. Mobiles Endgerät (403) zur Nutzung in einem drahtlosen Kommunikationssystem, das umfasst:
eine Empfangsvorrichtung (1001) zum Empfangen von Dienstdateneinheiten über das drahtlose Kommunikationssystem; und
eine Steuervorrichtung (1002), die dazu eingerichtet ist, die Empfangsvorrichtung zu steuern,
wobei die Steuervorrichtung (1002) eine Bestimmungsvorrichtung (1003) zum Bestimmen einer mit den Dienstdateneinheiten verbundenen Fehlerhäufigkeit aufweist,
**dadurch gekennzeichnet, dass**
die Bestimmungsvorrichtung dazu eingerichtet ist, die Fehlerhäufigkeit in einer Funkverbindungssteuerungsschicht in einem Datenübertragungsmodus ohne Bestätigung zu bestimmen, und
das mobile Endgerät dazu eingerichtet ist, ein Messprotokoll auf der Basis der Fehlerhäufigkeit an eine Einheit zu senden, die die drahtlose Verbindung steuert.

24. Mobiles Endgerät nach Anspruch 23, wobei die Bestimmungsvorrichtung (1003) dazu konfiguriert ist, ein Verhältnis von einer Anzahl fehlerhafter Dienstdateneinheiten, die in einem bestimmten Zeitintervall empfangen wurden, zu einer Gesamtzahl an Dienstdateneinheiten, die in demselben Zeitintervall empfangen wurden, als die Fehlerhäufigkeit zu bestimmen.

25. Funknetzwerksteuerung (402) zur Nutzung in einem drahtlosen Kommunikationssystem, die umfasst:
eine Senderschnittstelle (1101) zur Verbindung mit zumindest einem Sender (1105);
eine Empfängerschnittstelle (1102) zur Verbindung mit zumindest einem Empfänger (1106);
eine Kernnetzschnittstelle (1103) zur Verbindung mit einem Kernnetzwerk (401) des drahtlosen Kommunikationssystems; und
eine Steuervorrichtung (1104) zum Steuern der Schnittstellen (1101, 1102, 1103), des Senders (1105) und des Empfängers (1106),
wobei die Funknetzwerksteuerung (402) weiterhin dazu konfiguriert ist,
einen Multimedia-Broadcast-Multicast-Dienst in dem drahtlosen Kommunikationssystem durch Senden von Dienstdateneinheiten über den Sender (1105) zu bilden; eine Nachricht über den Sender (1105) zu senden, wobei die Nachricht Konfigurationsinformationen enthält, die das Generieren von einem Messprotokoll auf der Basis einer mit den Dienstdateneinheiten verbundenen Fehlerhäufigkeit in einer Funkverbindungssteuerungsschicht im Modus ohne Bestätigung betreffen; Protokolle über mit den Dienstdateneinheiten verbundene Fehlerhäufigkeiten über den Empfänger (1106) zu empfangen; und
Übertragungsparameter für die Übertragung der Dienstdateneinheiten in Abhängigkeit von in den Protokollen enthaltenen Informationen anzupassen,
wobei die Protokolle Informationen über eine mit den Dienstdateneinheiten verbundene Fehlerhäufigkeit enthalten.

26. Funknetzwerksteuerung (402) nach Anspruch 25, wobei die Übertragungsparameter eine Übertragungsleistung, einen Spreizfaktor, eine Coderate oder Multiplexparameter umfassen.

27. Drahtloses Kommunikationssystem, das umfasst:
mindestens ein mobiles Endgerät (403) nach Anspruch 23 oder 24 und
eine Funknetzwerksteuerung (402) nach Anspruch 25 oder 26.

28. Testsystem (1200) für den Test eines mobilen Endgeräts (403), das umfasst:
einen Sender (1201) zum Senden von Daten an das mobile Endgerät (403);
einen Empfänger (1202) zum Empfangen von Daten von dem mobilen Endgerät (403);
eine Steuervorrichtung (1203), die dazu eingerichtet ist, den Empfänger (1202) und den Sender (1201) zu steuern; und
eine Benutzerschnittstelle (1204) zum Steuern der Funktionen des Testsystems und zum Ausgeben der Testergebnisse,
wobei die Steuervorrichtung (1203) weiterhin dazu konfiguriert ist,
einen Multimedia-Broadcast-Multicast-Dienst zu dem mobilen Endgerät durch Senden von Dienstdateneinheiten über den Sender (1201) einzurichten;
eine Nachricht an das mobile Endgerät (403) über den Sender (1201) zu senden,
wobei die Nachricht Konfigurationsinformationen enthält, die das Generieren von einem Messprotokoll auf der Basis einer mit den Dienstdateneinheiten verbundenen Fehlerhäufigkeit in einer Funkverbindungssteuerungsschicht im Modus ohne Bestätigung betreffen;
Protokolle von dem mobilen Endgerät über den Empfänger (1202) zu empfangen, UE, über mit den Dienstdateneinheiten verbundene Fehlerhäufigkeiten; und
ein Testprotokoll über die Benutzerschnittstelle auszugeben, das auf in den Protokollen enthaltenen Informationen basiert,
wobei die Protokolle Informationen über eine mit den Dienstdateneinheiten verbundene Fehlerhäufigkeit enthalten.

## Revendications

1. Procédé de contrôle de la qualité de service d'un service de radiodiffusion ou de multidiffusion dans un terminal mobile faisant partie d'un système de communication sans fil, comprenant les étapes consistant à :
a) recevoir des unités de données de service par l'intermédiaire d'une liaison sans fil du système de communication, et
b) déterminer un taux d'erreur associé aux dites unités de données de service (704),
**caractérisé en ce que** :
ladite étape b) est exécutée dans une couche de commande de couche de liaison radio dans un mode sans accusé de réception de transfert de données, et
après l'étape b), par une étape c) (707) consistant à envoyer un rapport de mesure fondé sur ledit taux d'erreur vers une entité commandant ladite liaison sans fil, et
en ajustant des paramètres de transmission pour la transmission desdites unités de données de service sur la base dudit rapport de mesure.

2. Procédé selon la revendication 1, dans lequel ledit taux d'erreur est le rapport du nombre d'unités corrompues de données de service reçues dans un intervalle de temps donné sur le nombre total d'unités de données de service reçues dans le même intervalle de temps.

3. Procédé selon la revendication 1, dans lequel lesdites unités de données de service sont segmentées en vue d'une transmission par l'intermédiaire de ladite liaison sans fil, et ledit taux d'erreur est le rapport du nombre de segments corrompus d'unités de données de service reçus dans un intervalle de temps donné sur le nombre total de segments d'unités de données de service reçus dans le même intervalle de temps.

4. Procédé selon l'une des revendications 1 à 3,
dans lequel ledit rapport est envoyé en établissant une connexion de liaison montante dans ledit système de communication sans fil à partir dudit terminal mobile vers ladite entité de commande.

5. Procédé selon l'une des revendications 1 à 3,
dans lequel ledit rapport ne peut pas être associé à l'identité dudit terminal mobile par ladite entité.

6. Procédé selon l'une des revendications 1 à 5,
dans lequel ledit rapport de mesure comprend une valeur associée au dit taux d'erreur déterminé.

7. Procédé selon l'une des revendications 1 à 5,
dans lequel ledit rapport de mesure comprend des informations de ce que ledit taux d'erreur dépasse un seuil défini.

8. Procédé selon l'une des revendications 1 à 7, comprenant en outre, avant l'étape a), une étape d) (702) consistant à recevoir un message comprenant des informations de configuration concernant au moins l'une de ladite étape b) de détermination et de ladite étape c) d'envoi.

9. Procédé selon la revendication 8, dans lequel ledit message est reçu en provenance d'un canal de commande de service de radiodiffusion ou de multidiffusion multimédia, d'un canal de commande de radiodiffusion ou d'un canal commun de commande.

10. Procédé selon l'une des revendications 1 à 9, comprenant en outre, avant ladite étape c), une étape e) consistant à recevoir une instruction d'activation, ledit rapport de mesure n'étant envoyé qu'après activation par ladite instruction d'activation.

11. Procédé selon l'une des revendications 8 à 10,
dans lequel ledit rapport de mesure est envoyé à un instant déduit des informations comprises dans ledit message.

12. Procédé selon l'une des revendications 1 à 10,
dans lequel ledit rapport de mesure est envoyé périodiquement.

13. Procédé selon l'une des revendications 1 à 10,
dans lequel ledit rapport de mesure est envoyé lorsque ledit taux d'erreur dépasse un seuil prédéfini.

14. Procédé selon la revendication 7 ou 13, dans lequel ledit seuil est déduit d'un attribut de qualité de service associé au dit service de radiodiffusion ou de multidiffusion.

15. Procédé selon la revendication 14, dans lequel ledit seuil est égal au dit attribut de qualité de service.

16. Procédé selon la revendication 14, dans lequel ledit seuil se trouve en dessous ou au-dessus dudit attribut de qualité de service avec une marge prédéfinie.

17. Procédé selon l'une des revendications précédentes, comprenant en outre les étapes consistant à :
envoyer, avant l'étape b), une primitive destinée à la configuration d'une mesure du taux d'erreur à partir d'une couche de commande de ressources radio du même terminal mobile vers la couche de commande de liaison radio (703), et
envoyer, après l'étape b), une primitive à partir de la couche de commande de liaison radio vers la couche de commande de ressource radio (705), laquelle comprend une valeur représentant le résultat de ladite étape b) de détermination.

18. Procédé selon l'une des revendications 1 à 17, comprenant en outre, avant l'étape b), les étapes consistant à :
f) recevoir des unités de données de service dudit service de radiodiffusion ou de multidiffusion par l'intermédiaire d'au moins une liaison sans fil supplémentaire du système de communication, et
g) combiner les données reçues à l'étape f) via les différentes liaisons sans fil et transporter les mêmes informations.

19. Procédé selon la revendication 18, dans lequel ledit rapport comprend en outre des informations sur le type de ladite combinaison.

20. Procédé selon la revendication 18 ou 19, dans lequel ledit rapport comprend des informations sur des cellules prises en considération pour ladite combinaison.

21. Procédé selon l'une des revendications 18 à 20,
dans lequel ledit rapport comprend des informations sur la qualité de réception d'une ou de plusieurs cellules prises en considération pour ladite combinaison.

22. Support de stockage pouvant être lu par un ordinateur, comportant des instructions mémorisées qui, lorsqu'elles sont exécutées sur un processeur de terminal mobile, amènent le terminal mobile à exécuter le procédé conforme à l'une des revendications 1 à 21.

23. Terminal mobile (403) destiné à une utilisation dans un système de communication sans fil, comprenant :
un moyen de réception (1001) permettant de recevoir des unités de données de service par l'intermédiaire dudit système de communication sans fil, et
un moyen de commande (1002) conçu pour commander ledit moyen de réception,
ledit moyen de commande (1002) comprenant un moyen de détermination (1003) permettant de déterminer un taux d'erreur associé aux dites unités de données de service,
**caractérisé en ce que**
le moyen de détermination est conçu pour déterminer le taux d'erreur dans une couche de commande de liaison radio dans un mode sans accusé de réception de transfert de données, et
le terminal mobile est conçu pour envoyer un rapport de mesure fondé sur ledit taux d'erreur à une entité commandant ladite liaison sans fil.

24. Terminal mobile selon la revendication 23, dans lequel ledit moyen de détermination (1003) est configuré pour déterminer, comme étant ledit taux d'erreur, un rapport du nombre d'unités corrompues de données de service reçues dans un intervalle de temps donnés sur le nombre total d'unités de données de service reçues dans le même intervalle de temps.

25. Contrôleur de réseau radio (402) destiné à une utilisation dans un système de communication sans fil, comprenant :
une interface d'émetteur (1101) destinée à le relier à au moins un émetteur (1105),
une interface de récepteur (1102) destinée à le relier à au moins un récepteur (1106),
une interface de réseau central (1103) destinée à le relier à un réseau central (401) dudit système de communication sans fil, et
un moyen de commande (1104) destiné à commander lesdites interfaces (1101, 1102, 1103), ledit émetteur (1105) et ledit récepteur (1106),
ledit contrôleur de réseau radio (402) étant en outre configuré pour
établir un service de radiodiffusion ou de multidiffusion multimédia dans ledit système de communication sans fil en transmettant des unités de données de service par l'intermédiaire dudit émetteur (1105),
émettre un message par l'intermédiaire dudit émetteur (1105), le message comprenant des informations de configuration concernant la génération dans une couche de commande de liaison radio en mode sans accusé de réception d'un rapport de mesure fondé sur un taux d'erreur associé aux dites unités de données de service,
recevoir des rapports concernant des taux d'erreur associés aux dites unités de données de service par l'intermédiaire dudit récepteur (1106), et
adapter les paramètres de transmission en vue de la transmission desdites unités de données de service en fonction des informations comprises à l'intérieur desdits rapports,
lesdits rapports comprenant des informations sur un taux d'erreur associé aux dites unités de données de service.

26. Contrôleur de réseau radio (402) selon la revendication 25, dans lequel lesdits paramètres de transmission comprennent une puissance de transmission, un facteur d'étalement, un débit ou des paramètres de multiplexage.

27. Système de communication sans fil comprenant :
au moins un terminal mobile (403) conforme à la revendication 23 ou 24, et
un contrôleur de réseau radio (402) conforme à la revendication 25 ou 26.

28. Système de test (1200) destiné aux tests d'un terminal mobile (403), comprenant :
un émetteur (1201) destiné à envoyer des données vers ledit terminal mobile (403),
un récepteur (1202) destiné à recevoir des données provenant dudit terminal mobile (403),
un moyen de commande (1203) conçu pour commander ledit récepteur (1202) et ledit émetteur (1201), et
une interface utilisateur (1204) destinée à commander les fonctions du système de test et à émettre en sortie les résultats des tests,
ledit moyen de commande (1203) étant en outre configuré pour
établir un service de radiodiffusion ou de multidiffusion multimédia vers ledit terminal mobile en transmettant des unités de données de service par l'intermédiaire dudit émetteur (1201),
émettre un message vers ledit terminal mobile (403), par l'intermédiaire dudit émetteur (1201), le message comprenant des informations de configuration concernant la génération dans une couche de commande de liaison radio en mode sans accusé de réception d'un rapport de mesure fondé sur un taux d'erreur associé aux dites unités de données de service,
recevoir des rapports provenant dudit terminal mobile, UE, par l'intermédiaire dudit récepteur (1202), au sujet des taux d'erreur associés aux dites unités de données de service, et
émettre en sortie un rapport de tests, par l'intermédiaire de ladite interface utilisateur, sur la base des informations comprises à l'intérieurs desdits rapports,
dans lequel lesdits rapports comprennent des informations sur un taux d'erreur associé aux dites unités de données de service.
